Europäisches Patentamt

European Patent Office

Office européen des brevets

(11) Numéro de publication: **0 064 900**

**A1**

(12) # DEMANDE DE BREVET EUROPEEN

(21) Numéro de dépôt: **82400697.7**

(22) Date de dépôt: **16.04.82**

(51) Int. Cl.³: **F 42 C 13/04**
**G 01 S 13/50**
**//G01S7/36**

(30) Priorité: **21.04.81 FR 8107917**

(43) Date de publication de la demande:
**17.11.82 Bulletin 82/46**

(84) Etats contractants désignés:
**DE GB IT**

(71) Demandeur: **THOMSON-CSF**
**173, Boulevard Haussmann**
**F-75379 Paris Cedex 08(FR)**

(72) Inventeur: **Falconnier, Jean-Claude**
**THOMSON-CSF SCPI 173, bld Haussmann**
**F-75379 Paris Cedex 08(FR)**

(72) Inventeur: **Klein, Claude**
**THOMSON-CSF SCPI 173, bld Haussmann**
**F-75379 Paris Cedex 08(FR)**

(72) Inventeur: **Meriaux, Claude**
**THOMSON-CSF SCPI 173, bld Haussmann**
**F-75379 Paris Cedex 08(FR)**

(74) Mandataire: **Eisenbeth, Jacques Pierre et al,**
**THOMSON-CSF SCPI 173, Bld Haussmann**
**F-75379 Paris Cedex 08(FR)**

(54) Système électromagnétique de détection à corrélation, et fusée de proximité comportant un tel système.

(57) Le système conforme à l'invention comprend un radar à onde continue émettant deux fréquences ($F_1$ et $F_2$) alternativement au rythme d'un code pseudo-aléatoire. Ces deux fréquences sont telles que leur différence est égale à 1/2 τ, τ étant la largeur d'un échantillon de code. Le signal émis est modulé par des rampes de phase. Le signal video reçu affecté de l'effet Doppler est corrélé avec le code pseudo-aléatoire retardé Le produit de corrélation est filtré détecté et comparé à un seuil déterminé Le dépassement de ce seuil déclenche une charge pyrotechnique.

La présente invention est applicable aux fusées de proximité fonctionnant aux fréquences millimétriques.

FIG_1

EP 0 064 900 A1

Croydon Printing Company Ltd.

# SYSTEME ELECTROMAGNETIQUE DE DETECTION A CORRELATION ET FUSEE DE PROXIMITE COMPORTANT UN TEL SYSTEME

La présente invention concerne un système de détection électromagnétique à corrélation, appliqué plus particulièrement à la réalisation de fusées de proximité actives, de très faibles dimensions et poids, transportées par des engins, appelés également "missiles", se déplaçant à grande vitesse.

Une fusée de proximité doit effectuer la mise à feu de la charge explosive transportée par le missile lorsque la cible fixe ou mobile se trouve dans une certaine zone à proximité de l'engin. Cette explosion doit avoir lieu avec la plus grande probabilité, même en présence de fort brouillage. Le système de détection et de déclenchement doit donc être léger, peu encombrant, robuste et fiable et ne doit pas perturber les qualités aérodynamiques du missile porteur.

Il existe plusieurs types de systèmes de détection parmi lesquels les systèmes qui assurent la mise à feu après avoir estimé la distance à la cible par des procédés exploitant soit l'effet Doppler, soit la technique des impulsions brèves.

Les systèmes du premier type sont extrêmement sensibles au brouillage, même simple et présentent une probabilité élevée de déclenchements parasites. Ceux du deuxième type nécessitent une puissance crête très importante étant donné le faible facteur de forme nécessité par la suppression des ambiguités en distance. Un tel système, en plus de son encombrement et de son poids, peut déclencher la mise à feu en dehors de la zone prévue étant donné l'ambiguité de vitesse qu'il présente.

Le procédé de corrélation permet de réaliser un système de détection sans ambiguité de distance ou de vitesse, avec une puissance crête d'émission très inférieure à celle des systèmes précédents, ce qui permet de rendre l'émission plus discrète. De plus, la probabilité de faux déclenchement en dehors de la zone prévue pour la mise à feu ou en présence de brouillage important est très réduite.

Les fusées de proximité conçues jusqu'à présent selon ce procédé utilisent une modulation de phase de l'onde hyperfréquence émise, soit avec une phase 0, soit avec une phase $\pi$ . Cette modulation est commandée par un code pseudo-aléatoire. Ce type de modulation permet d'éliminer les ambiguités et d'augmenter considérablement le facteur de forme de la suite d'impulsions. A la réception, l'onde reçue, renvoyée par la cible, est mélangée avec une fraction de l'onde hyperfréquence non modulée en phase. On obtient alors un signal videofréquence dont le signe dépend de la phase 0 ou $\pi$ de l'onde hyperfréquence reçue après réflexion sur la cible. Le retard entre le signal video et l'onde émise correspondante dépend de la distance de la cible et de retards connus propres aux circuits. On peut alors corréler le signal video avec le code émis retardé de façon à éliminer la modulation codée du signal video pour une distance cible donnée et à restituer le signal utile.

Dans de tels systèmes la présence d'un modulateur de phase 0-$\pi$ et des circuits annexes, commande et isolateurs, rend la réalisation de l'ensemble hyperfréquence plus complexe. Il en est de même dans la chaîne de réception étant donné la présence de parasites de commutation introduits par le modulateur 0-$\pi$. De plus un tel modulateur 0-$\pi$ est difficile à réaliser aux fréquences hyperfréquence très élevées.

La présente invention a pour but de remédier aux inconvénients précités et permet de réaliser un système de détection particulièrement fiable assurant la mise à feu dans une zone parfaitement délimitée.

Un autre objet de la présente invention est de réaliser un système de détection dont la puissance crête d'émission est peu élevée, qui peut travailler à des fréquences hyperfréquence extrêmement élevées, et qui est donc peu encombrant.

Un autre objet de la présente invention est un système de détection particulièrement simple et peu coûteux.

3

Un autre objet de la présente invention est d'utiliser une modulation et un circuit de corrélation permettant de reconstituer à partir du signal video, dont la moyenne est sensiblement nulle, un signal continu, caractéristique d'un signal reçu d'une cible située à une distance donnée du radar à corrélation.

Selon l'invention, le système de détection électromagnétique à corrélation comportant un radar à onde continue est caractérisé en ce que la fréquence du signal hyperfréquence émis est commutée, au rythme d'un code pseudo-aléatoire, alternativement sur une première fréquence F1, pour les niveaux bas du code, et sur une deuxième fréquence F2, différente de la première, pour les niveaux hauts.

La différence entre ces deux fréquences F1 et F2 est égale à $1/2\,\mathcal{T}$, $\mathcal{T}$ étant la largeur d'un échantillon du code pseudo-aléatoire.

D'autres caractéristiques et avantages de la présente invention apparaîtront à la lecture de la description détaillée faite ci-après avec référence aux figures ci-annexées qui représentent :

- la figure 1, le schéma synoptique d'un mode de réalisation préférentiel du système selon l'invention ;

- les figures 2 et 3, la forme des signaux en différents points du système de la figure 1 dans le cas d'une cible ponctuelle immobile par rapport au radar, pour deux codes pseudo-aléatoires et deux distances radar-cible différents ;

- la figure 4, la forme des signaux en différents points du système de la figure 1 dans le cas général d'une cible mobile par rapport au radar.

Comme il a déjà été mentionné, le système de détection électromagnétique ne doit effectuer la mise à feu du dispositif associé que lorsque la fusée de proximité constituant l'ensemble et portée par le missile pénètre dans la zone de distance assignée par rapport à la cible. L'explosion doit avoir lieu avec le plus grande probabilité, même en présence de brouillage. Pour être difficilement repérable par les éventuels dispositifs de contre-mesure, le détecteur selon l'invention utilise un émetteur de faible puissance sur une fréquence extrêmement élevée et un dispositif aérien éclairant la cible pendant un temps qui est court par rapport à la durée du trajet.

Des dispositifs annexes connus n'entrant pas dans le cadre de la présente invention assurent le guidage du missile.

Dans le système de détection électromagnétique à corrélation conforme à l'invention, le radar à onde continue émet un signal hyperfréquence de fréquence $F_1$ ou $F_2$, différente de $F_1$, en alternance, les sauts de fréquence $F_1/F_2$ étant commandés par les niveaux bas, pour la fréquence $F_1$ et hauts, pour la fréquence $F_2$, d'un code pseudo-aléatoire.

Les deux fréquences $F_1$ et $F_2$ sont choisies de telle façon que, à la fin d'un échantillon $\mathcal{T}$ de code pseudo-aléatoire, l'onde hyper-fréquence émise $F_2$ soit déphasée de $\pi$ par rapport à ce qu'elle aurait été si la fréquence avait été $F_1$.

Si la fréquence émise est égale à F entre les instants to et t, t étant compris entre to et to+ $\mathcal{T}$, la phase varie de :

$$\Delta \bar{\phi}_F(t) = \bar{\phi}_F(t) - \bar{\phi}_F(to) = 2 \mathcal{T}. F(t-to) \qquad (II)$$

La phase de référence est celle du signal émis en permanence à la fréquence $F_1$. Donc si $\varphi_F(t)$ désigne la phase relative du signal émis à la fréquence F à l'instant t, on a :

$$\Delta \varphi_F(t) = \varphi_F(t) - \varphi_F(to) = 2 \pi F(t-to) - 2 \pi F_1(t-to)$$

Or $F_1$ et $F_2$ doivent être telles que

$$\Delta \varphi F_2(to + \mathcal{T}) = \pm \pi$$
$$2 \pi | F_2 - F_1|\mathcal{T} = \pi$$

Donc $|F_2 - F_1| = 1/2 \mathcal{T}$ \qquad (I)

La largeur $\mathcal{T}$ d'un échantillon de code définit la résolution en distance et est liée à la largeur L de la zone assignée autour de la cible par la relation $L = c \mathcal{T}/2$ où c est la vitesse de la lumière. La relation (I) ci-dessus permet de calculer $|F_2 - F_1|$.

A l'instant t où la fréquence émise est F, la phase relative du signal émis par rapport à la phase de référence est égale à :

$$\varphi(t) = 2 \pi (F - F_1) (t - to) + \varphi(to) \qquad (IIbis)$$

5

to étant le début de l'échantillon et t étant compris entre to et to + $\tau$.

La phase relative est connue modulo $2\pi$ et est comprise entre $-\pi$ et $+\pi$.

Le radar émet donc une onde hyperfréquence modulée par des rampes de phase dont l'équation est donnée par la relation (II bis).

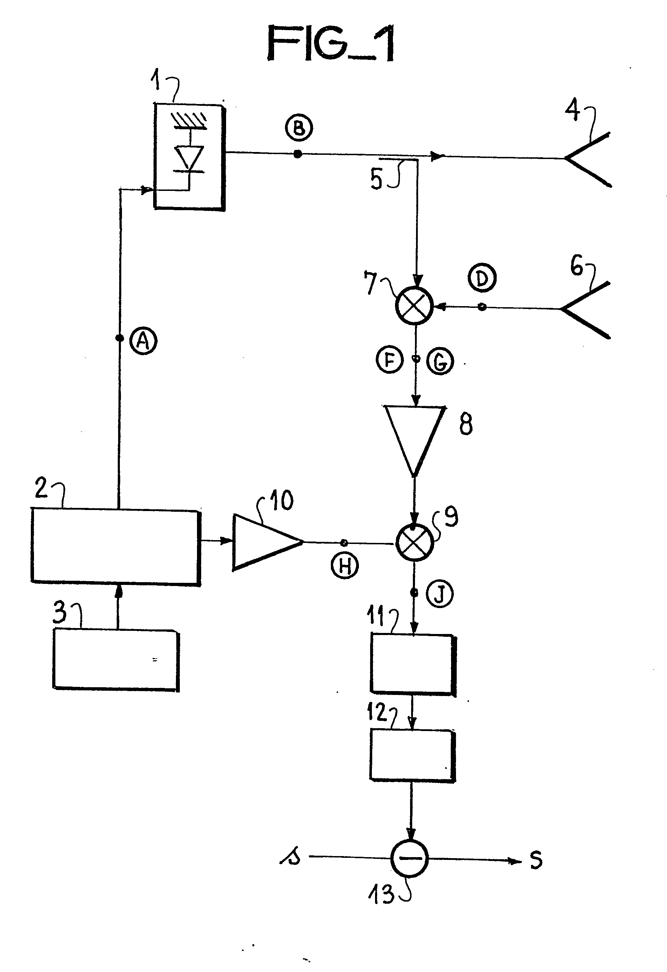

La figure 1 représente le schéma synoptique d'un mode de réalisation préférentiel du système faisant l'objet de l'invention. Ce système se compose d'un radar à corrélation à onde continue.

Le générateur 1, constitué par exemple par une diode Gunn couplée à une diode varactor, délivre une onde hyperfréquence dont la fréquence est égale à $F_1$ ou à $F_2$, la commutation entre ces deux fréquences se faisant au rythme d'un code pseudo-aléatoire généré par le circuit 2 qui est raccordé à la diode varactor. Le circuit 2 est par exemple constitué par un registre à décalage à réaction, composé de n étages et commandé par l'horloge 3.

La périodicité de ce code est égale à $N\tau$, $\tau$ étant la durée d'un incrément et N étant égal à $2^n - 1$. Dans un tel code pseudo-aléatoire, la différence entre le nombre d'échantillons positifs et négatifs d'une séquence est toujours égale à 1 et la multiplication du code par lui-même retardé redonne le code d'origine mais avec un nouveau retard. La largeur $\tau$ d'un incrément définit la résolution en distance.

Le signal hyperfréquence B modulé par les sauts de fréquence $F_1/F_2$ est émis par l'antenne 4, renvoyé par la cible et reçu par l'antenne réception 6. Le signal reçu D, après avoir été mélangé dans un circuit 7 à une fraction du signal émis prélevée par le coupleur 5 contient les informations distance et vitesse de la cible.

Si la distance d entre la fusée de proximité et la cible est telle que les signaux émis et reçus ne sont pas en quadrature au niveau du mélangeur, le signal de sortie du mélangeur n'est pas nul.

Ce signal F est d'abord appliqué à un amplificateur soit linéaire, soit limiteur 8 assurant une réception à taux de fausse alarme constant, puis à l'entrée d'un circuit de corrélation 9 dont l'autre entrée reçoit le code pseudo-aléatoire H généré par le circuit 2, convenablement retardé d'une quantité T, et amplifié par le circuit 10 à un niveau $\pm 1$. La valeur T dépend de la distance d de la cible. Ce retard peut être obtenu à l'aide d'un circuit de retard ou encore, comme représenté dans la figure 1, simplement en raccordant l'entrée du circuit de corrélation 9 à la sortie de la bascule du registre 2 correspondant au retard T désiré et amplifiée jusqu'à une amplitude $\pm 1$ par le circuit 10. La sortie J du corrélateur 9 est appliquée à l'entrée d'un circuit de filtrage des fréquences Doppler dont la bande passante correspond à la gamme de vitesses envisagées pour les cibles.

Ce filtre Doppler large bande peut être également complété par un banc de filtres Doppler, non représenté, correspondant chacun à un canal Doppler et indiquant la vitesse relative de la cible. Ce circuit de filtrage Doppler 11 est suivi d'un circuit de détection 12. Le signal détecté ayant une certaine amplitude est ensuite appliqué à un circuit 13 où il est comparé à un seuil s dont la valeur est déterminée selon les fluctuations de bruit de façon à obtenir une probabilité de fausse alarme très faible en l'absence de signal et à une probabilité de détection élevée sur la cible utile. Dès qu'il dépasse ce seuil, le signal S est appliqué au circuit de mise à feu de la charge pyrotechnique transportée par le missile.

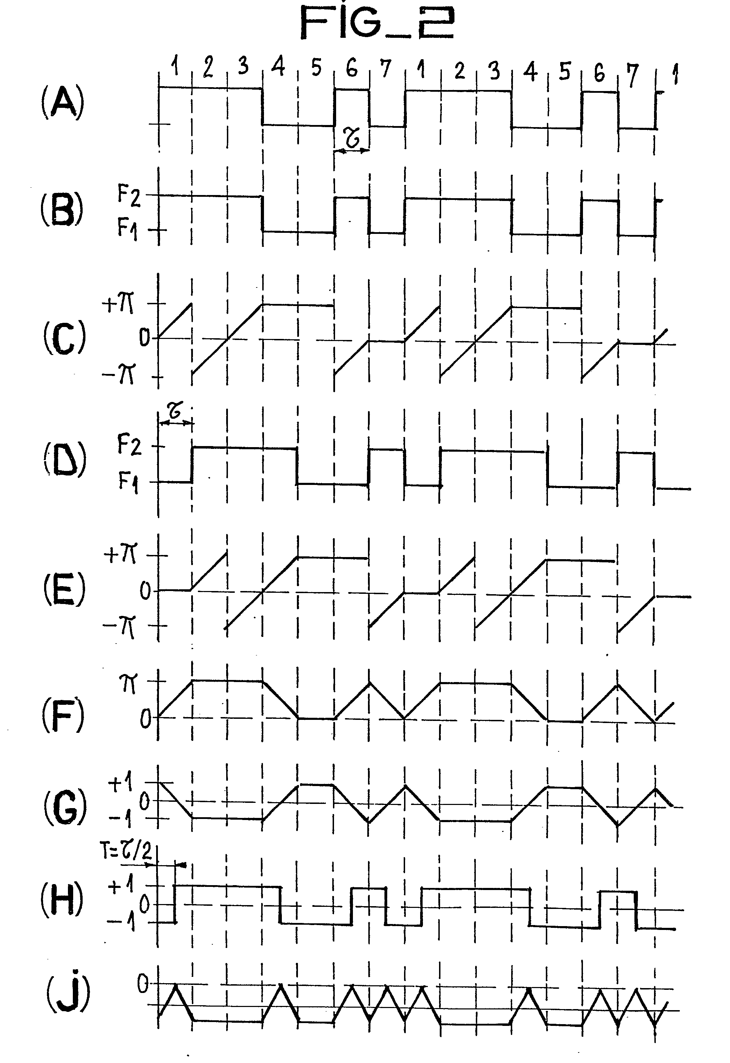

Les figures 2A à 2J, 3A à 3J et 4A à 4J représentent les signaux en différents points du schéma synoptique dans le cas où la deuxième fréquence $F_2$ est supérieure à la première $F_1$. Les indices A, B, C, D, E, F, G, H, J se réfèrent aux points indiqués dans le schéma synoptique de la figure 1.

L'indice A correspond au code pseudoaléatoire généré par le circuit 2 de la figure 1.

L'indice B correspond au signal émis par l'antenne d'émission 4 du radar, signal dont la fréquence est $F_1$ ou $F_2$ si le niveau de l'échantillon de code pseudoaléatoire généré est bas ou haut respectivement.

L'indice C correspond à la phase $\varphi_E$ du signal émis B par rapport à la phase de référence choisie qui est celle du signal hyperfréquence émis en permanence à la fréquence $F_1$, les relations (I) et (II bis) étant bien entendu satisfaites. Comme $\varphi_E$ est connu modulo $2\pi$ et est compris entre $-\pi$ et $+\pi$, la phase $\varphi_E$ présente au cours de certains échantillons de code une discontinuité.

L'indice D correspond au signal reçu par l'antenne de réception 6. C'est le signal émis et renvoyé par la cible située à une distance d du radar. Il subit donc un certain retard $\Delta t$ égal à la somme des temps de parcours radar vers cible et cible vers radar. De plus les fréquences émises sont augmentées de la fréquence Doppler si la cible est animée d'une vitesse relative par rapport au radar. Les différents cas seront étudiés dans les exemples illustrés par les figures 2, 3 et 4.

L'indice E correspond à la phase $\varphi_R$ du signal reçu représenté sur les figures désignée par D.

L'indice F correspond à la phase $\varphi_V$ du signal video délivré par le mélangeur 7 de la figure 1.

$$\varphi_V = \varphi_E - \varphi_R$$

L'indice G correspond à une autre représentation de la phase du signal video obtenue en attribuant la valeur +1 à un signal de phase 0, la valeur –1 à un signal de phase $\pm\pi$ et la valeur 0 à un signal de phase $\pm \pi/2$.

L'indice H correspond au code pseudo-aléatoire identique au code représenté en A mais retardé d'une certaine quantité T selon la durée $\Delta t$ du trajet radar-cible-radar suivi par l'onde émise. Ce retard T est par exemple égal à $\tau/2$, pour un trajet de durée $\Delta t = \tau$ et égal à 12,5 $\tau$ pour un trajet de durée $\Delta t = 2\tau$. C'est le code équivalent au signal video représenté en G.

L'indice J correspond au signal en sortie du circuit de corrélation 9 de la figure 1 réalisant la corrélation du signal illustré sur les figures d'indice G avec le code pseudo-aléatoire retardé de T, représenté sur les figures d'indice H.

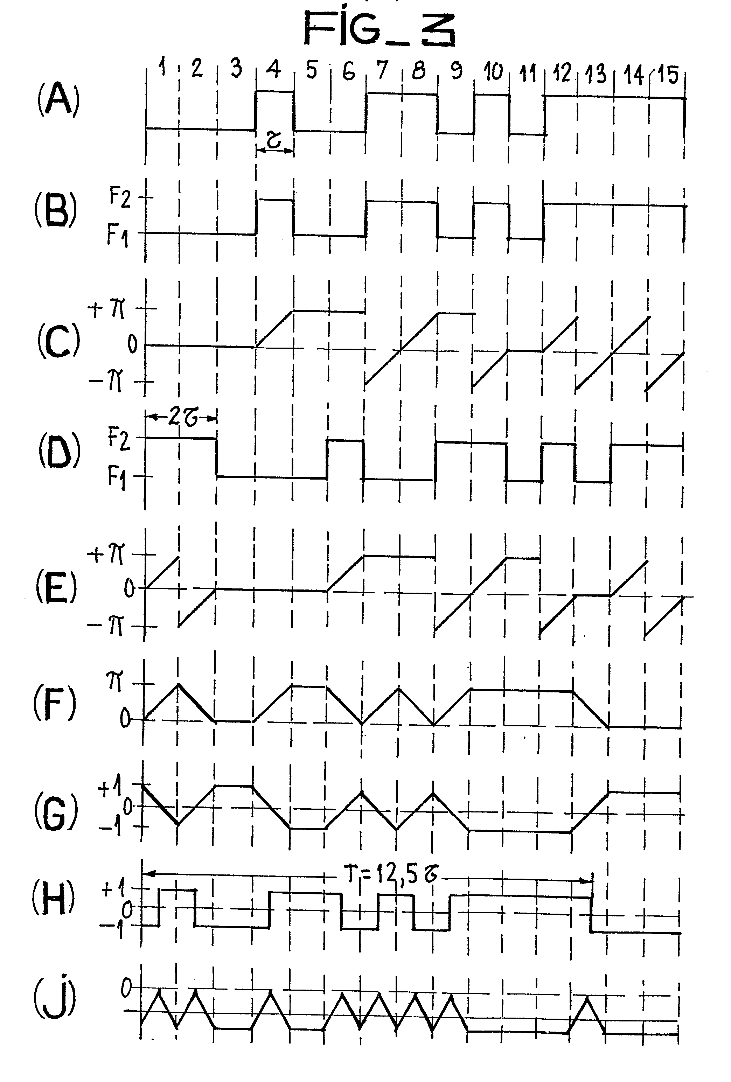

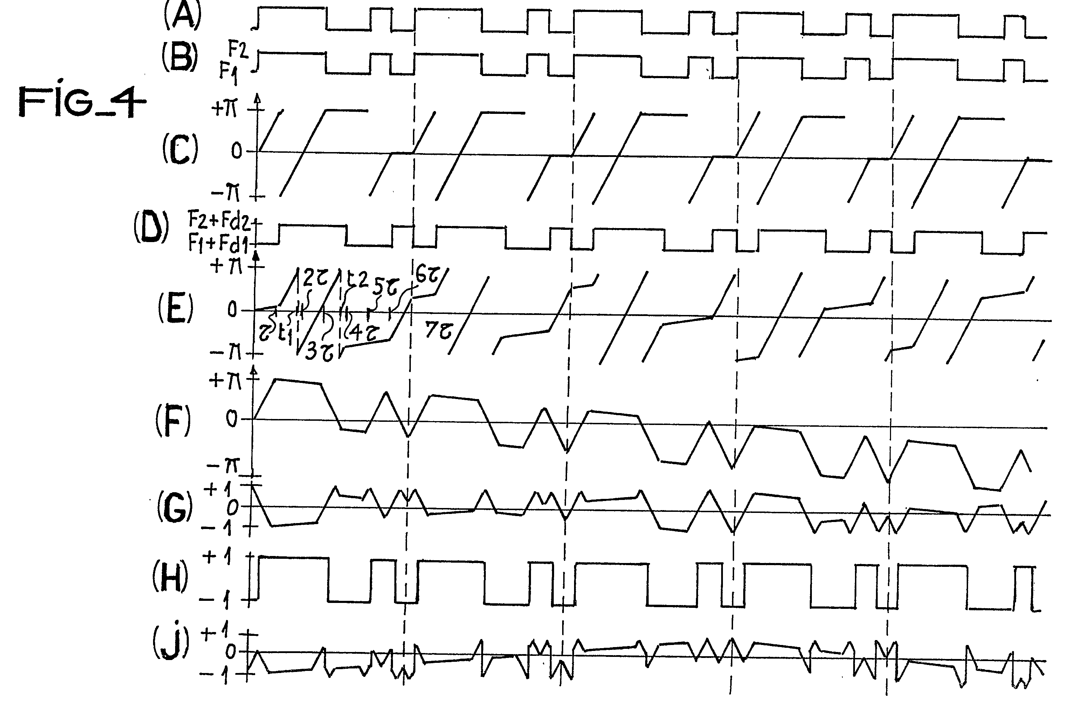

A titre d'exemple, les figures 2A et 4A représentent le code pseudo-aléatoire généré par le circuit 2 de la figure 1, lorsque celui-ci est un registre se composant de trois étages donc lorsque le code pseudo-aléatoire généré comporte sept moments et est de période $7\tau$.

La figure 3A représente un code pseudo-aléatoire généré par un registre à quatre étages. Il comporte donc quinze moments et sa période est $15\tau$.

Les figures 2D, 3D et 4D représentent le signal renvoyé par la cible et reçu par l'antenne 6 du radar. Entre l'émission du signal par l'antenne 4 et sa réception par l'antenne 6, il s'est écoulé un temps $\Delta t$.

Deux cas ont été envisagés :

- le cas très particulier d'une cible ponctuelle immobile par rapport au radar, à une distance d.

Alors $\Delta t = 2 \times d/c$ où c est la vitesse de la lumière.

Donc $d = c \Delta t/2$

La figure 2 représente le cas d'une cible immobile à une distance $d = c \tau/2$, donc pour un temps de parcours total du signal $\Delta t = \tau$, avec comme indiqué ci-dessus un code pseudo-aléatoire à sept moments.

La figure 3 représente le cas d'une cible immobile à une distance $d = c \tau$, donc pour un temps de parcours total du signal $\Delta t = 2\tau$ et avec, comme mentionné ci-dessus, un code pseudo-aléatoire à quinze moments.

- le cas général d'une cible animée d'une vitesse relative par rapport au radar, avec $\Delta t = \tau$.

Le cas sera étudié dans la figure 4 pour un code pseudo-aléatoire à sept moments.

Lorsque la cible est supposée ponctuelle et immobile à une distance d du radar, le signal reçu est identique au signal émis B mais présente un retard $\Delta t = 2d/c$, égal dans le cas de la figure 2 à $\tau$ et dans le cas de la figure 3 à $2\tau$. C'est ce qui est illustré par les figures 2D et 3D respectivement.

La phase $\varphi_R$ du signal reçu D est identique à la phase $\varphi_E$ du signal émis mais présente pour la même raison un retard $\Delta t$. C'est

ce qui est représenté sur les figures 2E et 3E qui sont identiques aux figures 2C et 3C mais avec un retard $\Delta t$ égal à $\tau$ et $2\tau$ respectivement.

Le signal reçu D est ensuite mélangé à une fraction du signal émis. La phase du signal video délivré par le mélangeur est égale à

$$\varphi_V = \varphi_E - \varphi_R$$

Elle est représentée sur les figures 2F et 3F respectivement.

On peut représenter différemment ce signal en donnant l'amplitude +1 au signal de phase 0 et -1 au signal de phase $\pm \pi$. La table de vérité équivalente est la suivante :

| Signal émis – 1ère entrée du mélangeur | 0 | 0 | $\pi$ (ou $-\pi$) | $\pi$ (ou $-\pi$) |
|---|---|---|---|---|
| Signal reçu – 2ème entrée du mélangeur | 0 | $\pi$ (ou $-\pi$) | 0 | $\pi$ (ou $-\pi$) |
| signal de sortie | +1 | -1 | -1 | +1 |

La table de vérité ci-dessus correspond à la fonction "OU EXCLUSIF" du signal émis et du signal reçu. La valeur moyenne du signal de sortie est sensiblement nulle.

Ce signal video est appliqué au circuit de corrélation 9 de la figure 1 ainsi que le code pseudo-aléatoire équivalent, généré par le circuit 2, retardé d'une quantité T et amplifié jusqu'à une amplitude de $\pm 1$.

Dans le cas de la figure 2H, illustrant le code retardé équivalent au signal video 2G, le retard appliqué est $T = 0,5 \tau$ et dans le cas de la figure 3H, illustrant le code retardé, équivalent au signal video 3G, le retard appliqué est $T = 12,5 \tau$.

Les figures 2J et 3J représentent le signal issu de la corrélation du signal vidéo des figures 2G et 3G et du code pseudo-aléatoire équivalent des figures 2H et 3H respectivement. La valeur moyenne de ce signal est non nulle et caractérise la présence d'une

10

cible à la distance $d = c\Delta t/2$ de l'émetteur-récepteur radar, soit à une distance $d = c\tau/2$ et $d = c\tau$ pour les figures 2 et 3 respectivement.

Si la cible est affectée d'une certaine vitesse par rapport à l'organe récepteur, ce qui est le cas le plus vraisemblable et le plus courant, la distance d varie de façon continue et le signal reçu est affecté d'une fréquence Doppler. Les différents signaux sont représentés par la figure 4. Le code pseudo-aléatoire utilisé a sept moments et est représenté sur la figure 4A. Le signal émis et sa phase sont illustrés par les figures 4B et 4C respectivement.

Le signal est renvoyé par la cible mobile. Il est donc soumis à l'effet Doppler. A la fréquence $F_1$ correspond la fréquence Doppler $F_{d1}$, à la fréquence $F_2$ correspond la fréquence Doppler $F_{d2}$. On a toujours

$$2\pi(F_2 - F_1)\tau = \pi \text{ à l'émission} \quad (I)$$

Le signal reçu, représenté en 4D, se compose d'une alternance de deux fréquences $F'_2 = F_2 + F_{d2}$ et $F'_1 = F_1 + F_{d1}$. Comme dans le cas de la figure 2, on suppose que le temps mis par l'onde émise pour revenir sur l'antenne réception après avoir été renvoyée par la cible est égal à $\tau$. Les sauts de fréquence $F'_1/F'_2$ se font donc au rythme du même code pseudo-aléatoire que celui représenté en figure 4A mais retardé de $\tau$, $F'_1$ correspondant au niveau bas et $F'_2$ au niveau haut du code.

La phase prise comme référence est la phase du signal de fréquence $F_1$. La phase $\varphi_R$ du signal reçu est représentée sur la figure 4E.

Pour les échantillons $\tau$ pendant lesquels la fréquence reçue est $F'$ ($F' = F'_1$ ou $F'_2$), la phase $\varphi_R$ du signal reçu présente une pente $p(F')$ telle que :

$$p(F') = 2\pi F' - 2\pi F_1 = 2\pi(F' - F_1)$$

puisque la phase prise comme référence est celle du signal de fréquence $F_1$. La relation (I) est bien entendu toujours valables à savoir $F_2 - F_1 = 1/2\tau$. Par conséquent $p(F'_1) = 2\pi F_{d1}$ et $p(F'_2) = 2\pi(F_{d2} + 1/2\tau)$.

La phase varie linéairement, pendant chaque échantillon, suivant la relation (II bis).

$$\varphi_R(t) = \varphi_{F'}(t) = p'(t - t_o) + \varphi_{RO}$$

$\varphi_{RO}$ étant la phase à l'instant $t_o$, début de l'échantillon considéré, et t étant par conséquent compris entre $t_o$ et $t_o + \tau$.

Pour le premier échantillon, on considère que la phase initiale $\varphi_{RO} = 0$. La fréquence reçue étant

$$F' = F'_1 = F_1 + F_{d1},$$

la phase, en fin d'échantillon, donc au début de l'échantillon suivant, sera égale à :

$$\varphi_R(\tau) = 2\pi F_{d1} \tau$$

A la fin du deuxième échantillon pour lequel la fréquence reçue est $F' = F'_2 = F_2 + F_{d2}$

$$\varphi_R(2\tau) = p(F'_2) \times \tau + \varphi_R(\tau)$$
$$\varphi_R(2\tau) = 2\pi (F_{d1} + F_{d2}) \tau + \pi \quad [2\pi]$$

Cette phase est donc supérieure à d'une quantité égale à $2\pi (F_{d1} + F_{d2})$. Or on connaît la phase modulo $2\pi$. Elle doit en effet être comprise entre $-\pi$ et $+\pi$.

On aurait donc à un temps $t_1 < 2\tau$, une discontinuité :

$$\varphi_R(t_1) = p(F'_2) \times (t_1 - \tau) + \varphi_R(\tau) = \pm \pi.$$

De $t_1$ à $2\tau$, $\varphi_R$ continue de croître depuis $-\pi$ jusqu'à atteindre

$$\varphi_R(2\tau) = 2\pi (F_{d1} + F_{d2}) \tau - \pi.$$

Pendant les troisième et quatrième échantillons, la fréquence reçue est également $F'_2$.

La phase continue de croître avec la même pente que pour le deuxième échantillon.

Pour $t = 4\tau$, la phase serait donc

$$\varphi_R(4\tau) = p(F'_2) \times 2\tau + \varphi_R(2\tau)$$
$$\varphi_R(4\tau) = 2\pi (F_{d1} + 3F_{d2}) \tau + \pi \quad [2\pi]$$

La phase serait donc supérieure à $\pi$ d'une quantité égale à $2\pi (F_{d1} + 3F_{d2}) \tau$.

On aura donc à un instant $2\tau < t_2 < 4\tau$, une discontinuité de la phase :

$$\varphi_R(t_2) = \pm \pi$$

12

De t2 à $4\tau$, la phase continue de croître avec la même pente de $-\pi$ à

$$\varphi_R(4\ \tau) = 2\ \pi(F_{d1} + 3F_{d2})\ \tau - \pi$$

Aux cinquième et sixième échantillons, la fréquence reçue est $F'_1$. La phase varie donc linéairement avec une pente $p(F'_1)$ et ainsi de suite.

Il se produit donc un glissement progressif de la phase. Ce glissement est mis en évidence sur la figure 4F qui représente la différence entre la phase du signal émis et la phase du signal reçu $\varphi_V = \varphi_E - \varphi_R$. Sur cette figure on peut en effet observer une rotation lente de la phase. Cette rotation due à l'effet Doppler apparaît de façon très évidente quand on compare les figures 2F et 4F qui représentent toutes deux la différence de phase

$$\varphi_V = \varphi_E - \varphi_R$$

pour un code pseudo-aléatoire à sept moments et pour un temps $\Delta t = \tau$ entre l'émission et la réception du signal.

La figure 4G est une représentation de $\varphi_V$ en donnant l'amplitude +1 au signal de phase $\varphi_V = 0$, -1 au signal de phase $\varphi_V = \pm\pi$ et 0 au signal de phase $\varphi_V = \pm \pi/2$

La figure 4H est identique à la figure 2H et représente le code pseudo-aléatoire retardé de $\tau/2$, qui est le code équivalent du signal vidéo.

La figure 4J illustre le produit du signal vidéo représenté sur la figure 4G et du code de corrélation de la figure 4H pendant un temps inférieur à une période du signal Doppler.

La moyenne du signal représenté sur 4J est d'abord négative, puis nulle, puis positive, puis nulle à nouveau et ainsi de suite. Elle varie à la fréquence Doppler. En filtrant, on obtient donc un signal dont la fréquence est égale à la fréquence Doppler et dont la présence est caractéristique de la présence d'une cible à une distance voisine de $d = c\ \tau/2$ du radar. Puisque la cible est mobile, par rapport au radar, sa distance varie donc de façon continue.

Le raisonnement précédent effectué dans le cas d'un retard de

13

l'onde reçue égal à $\tau$ par rapport à l'onde émise, peut être appliqué à tous les retards multiples de $\tau$, donc à la surveillance d'une distance multiple de c $\tau/2$ au radar.

En effet, à chaque valeur de d ainsi définie peut correspondre un code équivalent au code du signal video, c'est-à-dire présentant un retard T par rapport au code d'origine rythmant la modulation de l'onde émise par des rampes de phase. On peut donc réaliser une corrélation et ainsi surveiller cette distance au radar. L'obtention d'une fréquence Doppler après filtrage du produit de corrélation traduira alors l'existence d'une cible mobile par rapport au radar à une distance de celui-ci proche de la distance ainsi définie.

La présente invention est applicable principalement aux fusées de proximité dans lesquelles on cherche à travailler à des fréquences très élevées pouvant aller jusqu'aux fréquences millimétriques.

# REVENDICATIONS

1. Système de détection électromagnétique à corrélation comportant un radar à onde continue, caractérisé en ce que la fréquence du signal hyperfréquence émis est commutée, au rythme d'un code pseudo-aléatoire, alternativement sur une première fréquence $(F_1)$ pour les niveaux bas du code et sur une deuxième fréquence $(F_2)$ différente de la première, pour les niveaux hauts.

2. Système de détection électromagnétique à corrélation, selon la revendication 1, caractérisé en ce que la différence entre les deux fréquences $(F_1)$ et $(F_2)$ est égale, en valeur absolue, à $1/2\tau$, $\tau$ étant la largeur d'un échantillon de code pseudo-aléatoire.

3. Système de détection électromagnétique à corrélation selon la revendication 2, caractérisé en ce que le signal reçu, renvoyé par la cible et affecté de fréquence Doppler $(F_1 + F_{d1}/F_2 + F_{d2})$ est mélangé au signal émis $(F_1/F_2)$ puis est, après amplification, corrélé avec le code pseudo-aléatoire retardé d'une quantité correspondant à la détection d'une cible à une distance pré-déterminée, le produit de corrélation étant ensuite filtré par un filtre Doppler, détecté, puis comparé à un seuil prédéterminé dans un circuit comparateur dlivrant un signal S lorsqu'il se produit un dépassement de seuil.

4. Système de détection électromagnétique à corrélation selon la revendication 1, caractérisé en ce que le signal émis est généré par une diode Gunn couplée à une diode varactor.

5. Système de détection électromagnétique à corrélation selon la revendication 1, caractérisé en ce que le code pseudo-aléatoire est généré par un registre à décalage.

6. Système de détection électromagnétique à corrélation selon les revendications 3 et 5, caractérisé en ce que le code pseudo-aléatoire retardé, utilisé pour la corrélation du signal video, est fourni par un circuit de retard $\tau/2$ raccordé au registre à décalage, à la sortie de la bascule correspondant à, $\tau/2$ près, au retard désiré.

7. Fusée de proximité équipée d'un système de détection

15

électromagnétique à corrélation selon l'une quelconque des revendications précédentes.

8. Fusée de proximité selon les revendications 3 et 7, caractérisée en ce qu'elle comprend un système de déclenchement de la charge pyrotechnique et un système de déclenchement de cette charge commandé par le signal (S) délivré par le circuit comparateur du système de détection.

FIG_1

0064900

1/4

FIG_2

0064900

FIG_3

FIG_4

Office européen
des brevets

**RAPPORT DE RECHERCHE EUROPEENNE**

Numéro de la demande

EP 82 40 0697

| Catégorie | Citation du document avec indication, en cas de besoin, des parties pertinentes | Revendication concernée |
|---|---|---|
| XY | US - A - 4 005 420 (T.W. McDONALD)<br>* Page de garde * | 1,3,4,7 |
| Y | FR - A - 1 434 139 (BABCOCK ELEC-TRONICS CORPORATION)<br>* Figures 1 et 2; page 2, colonne de droite, ligne 29 à page 6, colonne de droite, ligne 13 *<br>& DE - A - 1 302 842 | 1,3,7 |
| Y | US - A - 4 078 235 (H. NODA et al)<br>* Figures 1,2; colonne 3, lignes 4 à 68 * | 4 |
| Y | US - A - 4 214 240 (F. WEISS)<br>* En entier * | 7 |
| A | CA - A - 911 023 (S. RAUCH) | |
| A | US - A - 3 447 155 (J.E. WEBB) | |
| A | US - A - 4 232 314 (D.J. ADRIAN) | |
| A | US - A - 3 526 894 (R. GUILHEM et al) | |
| A | FR - A - 1 473 967 (C.F.T.H.) | |

**CLASSEMENT DE LA DEMANDE (Int. Cl. 3)**

F 42 C 13/04
G 01 S 13/50//
G 01 S 7/36

**DOMAINES TECHNIQUES RECHERCHES (Int. Cl. 3)**

G 01 S
F 42 C 13

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 18-05-1982 | LEROY |

OEB Form 1503.1 06.78